(19) **Europäisches Patentamt**
**European Patent Office**
**Office européen des brevets**

(11) **EP 4 669 560 B1**

(12) **EUROPÄISCHE PATENTSCHRIFT**

(45) Veröffentlichungstag und Bekanntmachung des Hinweises auf die Patenterteilung:
**13.05.2026   Patentblatt 2026/20**

(21) Anmeldenummer: **24705686.4**

(22) Anmeldetag: **20.02.2024**

(51) Internationale Patentklassifikation (IPC):
**B62D 6/00** *(2006.01)*      **B62D 15/02** *(2006.01)*

(52) Gemeinsame Patentklassifikation (CPC):
**B62D 6/007; B62D 15/025;** B62D 5/0463;
B62D 6/002

(86) Internationale Anmeldenummer:
**PCT/EP2024/054325**

(87) Internationale Veröffentlichungsnummer:
**WO 2024/175612 (29.08.2024 Gazette 2024/35)**

(54) **VERFAHREN ZUR STEUERUNG EINES ELEKTROMECHANISCHEN LENKSYSTEMS BEI HALBAUTONOMEM FAHRMODUS DES LENKSYSTEMS MIT POSITIONSREGELUNG MITTELS BOOST-REGELUNG**

METHOD FOR CONTROLLING AN ELECTROMECHANICAL STEERING SYSTEM IN A SEMI-AUTONOMOUS DRIVING MODE OF THE STEERING SYSTEM WITH A POSITION CONTROL USING A BOOST CONTROL

PROCÉDÉ DE COMMANDE D'UN SYSTÈME DE DIRECTION ÉLECTROMÉCANIQUE DANS UN MODE DE CONDUITE SEMI-AUTONOME DU SYSTÈME DE DIRECTION AVEC UNE COMMANDE DE POSITION À L'AIDE D'UNE COMMANDE D'AMPLIFICATION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **24.02.2023   BE 202305137**

(43) Veröffentlichungstag der Anmeldung:
**31.12.2025   Patentblatt 2026/01**

(73) Patentinhaber:
• **thyssenkrupp Presta AG**
**9492 Eschen (LI)**
• **thyssenkrupp AG**
**45143 Essen (DE)**

(72) Erfinder:
• **FAZEKAS, Csaba**
**1141 Budapest (HU)**
• **MULLER, Mark**
**1114 Budapest (HU)**

(74) Vertreter: **thyssenkrupp Intellectual Property GmbH**
**ThyssenKrupp Allee 1**
**45143 Essen (DE)**

(56) Entgegenhaltungen:
**EP-A2- 2 842 833      EP-B1- 2 842 833**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Steuerung eines elektromechanischen Lenksystems bei halbautonomem oder halbautomatischem Fahrmodus des Lenksystems und ein elektromechanisches Lenksystem eines Kraftfahrzeuges.

Fahrassistenzsysteme werden in Kraftfahrzeugen eingesetzt, um den Fahrer eines Kraftfahrzeuges bei der Durchführung verschiedener Fahrmanöver zu unterstützen. Dabei sind im Stand der Technik halbautonom oder halbautomatisch genannte Fahrassistenzsysteme bekannt, bei denen durch das Fahrassistenzsystem eine Bewegung des Fahrzeugs gesteuert werden kann, der Fahrer aber eingreifen und die Steuerung übernehmen kann. Das Fahrerassistenzsystem weist einen Positionsregler zur Bestimmung des zusätzlichen Lenkmomentes auf. Für die Steuerung durch den Fahrer ist hingegen ein Drehmomentregler verantwortlich. Kommt es nun zu einem Lenkeingriff durch den Fahrer bei aktivem Fahrerassistenzsystem, werden beide Regler in Kombination verwendet, um eine Stellgröße für den Elektromotor zu berechnen. Es kann dabei vorkommen, dass sich die beiden Regler gegenseitig stören und unerwünschte Oszillationen auftreten, was sich negativ auf das Lenkgefühl ausübt.

Aus der Patentschrift EP 284 2833 B1 ist ein Positionsregler in Form eines PID-Reglers realisiert, dessen Ausgang ein erforderliches Motordrehmoment (engl. requested motor torque) ist. Das erforderliche Motordrehmoment wird zu einem in einem Boost-Regler (engl. boost controller) bestimmten erforderlichen Motordrehmoment addiert, um eine Stellgröße für den Elektromotor zu bestimmen.

Es ist Aufgabe der vorliegenden Anmeldung, ein Verfahren zur Steuerung eines elektromechanischen Lenksystems bei halbautonomem oder halbautomatischem Fahrmodus des Lenksystems anzugeben, das eine verbesserte Bestimmung des erforderlichen Motordrehmomentes aufweist.

Die Aufgabe wird von einem Verfahren mit den Merkmalen des Anspruchs 1 und einem elektromechanischen Lenksystem mit den Merkmalen des Anspruchs 12 gelöst.

Demnach ist ein Verfahren zur Steuerung eines elektromechanischen Lenksystems bei halbautonomem oder halbautomatischem Lenkvorgang vorgesehen, aufweisend den folgenden Schritt:

- Bestimmen eines erforderlichen Motordrehmomentes zur Ansteuerung eines Elektromotors einer Servoeinheit des elektromechanischen Lenksystems, wobei eine Boost-Regelung (dt. auch Verstärkungsregelung) durchgeführt wird, die in Abhängigkeit von einem am Lenkrad anliegenden Handdrehmoment und der Fahrzeuggeschwindigkeit sowie einem Lenksäulenversatzdrehmoment das erforderliche Motordrehmoment bestimmt, und wobei das Lenksäulenversatzdrehmoment eine Positionsregelung des Elektromotors, eines Lenkritzes oder einer Zahnstange beinhaltet.

Dadurch, dass die Kombination aus Positionsregelung und Drehmomentregelung im Eingang der Boost-Regelung durchgeführt wird, kann das Auftreten von Stabilitätsproblemen verhindert werden.

Vorzugsweise umfasst das Verfahren einen LQ-Regler, der der Boost-Regelung vorgeschaltet ist und der das Lenksäulenversatzdrehmoment basierend auf der Grundlage entweder einer Referenzposition des Elektromotors und einer gemessenen Position des Elektromotors oder einer Referenzritzelposition eines Lenkritzels des Lenksystems und einer gemessenen Position des Lenkritzels oder der Referenzzahnstangenposition und der gemessenen Zahnstangenposition bestimmt.

Weiterhin ist es vorteilhaft, wenn das Verfahren ein Lenkungsmodell für die Boost-Regelung umfasst, das die Boost-Regelung und ein nachgeschaltetes Lenkungsmodell aufweist, wobei eine Verstärkungskurve der Boost-Regelung verschiedene Betriebspunkte hat und in diesen Betriebspunkten linearisiert wird und für jeden dieser Betriebspunkte ein Lenkungsmodell vorhanden ist. Dabei ist es bevorzugt vorgesehen, wenn das nachgeschaltete Lenkungsmodell die gemessene Position des Elektromotors oder die gemessene Ritzelposition eines Lenkritzels des Lenksystems an den Eingang des LQ-Regler weitergibt.

Bevorzugt umfasst das Verfahren einen Zustandsschätzer, der Zustände des Lenksystems (bevorzugt einschließlich Last und Fahrermomente) bestimmt und diese an den LQ-Regler weitergibt. Der Zustandsschätzer kann einen Kalman-Filter umfassen.

In einer Ausführungsform definiert der LQ-Regler eine Verlustfunktion, die das Quadrat des Schleppfehlers (Differenz zwischen der Referenzmotorposition oder der Referenzritzelposition oder der Referenzzahnstangenposition und der gemessenen Motorposition oder der gemessenen Ritzelposition oder der gemessenen Zahnstangenposition), das Quadrat des Integrals des Schleppfehlers und das Quadrat des Lenksäulenversatzdrehmoments enthält.

Weiterhin kann es vorgesehen sein, dass das Verfahren eine Integrationseinheit und eine Dämpfungseinheit umfasst, wobei die Integrationseinheit das Integral des Schleppfehlers bereitstellt und an den LQ-Regler übermittelt und die Dämpfungseinheit ein Dämpfungsmoment bestimmt, dass von der Kraftfahrzeuggeschwindigkeit, weiteren gemessenen Werten sowie bevorzugt einer aus der Boost-Regelung abgeleiteten Verstärkung (engl. boost gain) abhängt, wobei die Verstärkung die Tangente der Verstärkungskurve bei einem festen (TSU)-Drehmoment ist.

Das Dämpfungsmoment ist vorzugsweise dazu vorgesehen, den Einfluss des Integrals des Schleppfehlers bei der Bestimmung des Lenksäulenversatzdrehmoments im LQ-Regler zu reduzieren.

Weiterhin kann das Verfahren einen Lenkalgorithmus umfassen, der mittels eines Referenzmotordrehmoment und weiteren Messwerten ein erforderliches Motordrehmoment bestimmt, das zu dem mittels der Boost-Regelung bestimmten erforderlichem Motordrehmoment addiert wird. Der daraus resultierende Wert wird bevorzugt in einem Motordrehmomentbegrenzer auf einen vorgegeben Wertebereich begrenzt und der daraus resultierende Wert fließt in das Lenkungsmodell ein.

Außerdem ist ein elektromechanisches Lenksystem für ein Kraftfahrzeug vorgesehen, wobei das Lenksystem Folgendes umfasst:

- ein mit einer unteren Lenkwelle verbundenes Ritzel, welches mit einer in einem Gehäuse entlang einer Längsachse verschieblich gelagerten Zahnstange zur Lenkung von Rädern in Eingriff steht,

- wenigstens einen Elektromotor zur Lenkkraftunterstützung, und

- eine elektronische Steuereinheit zur Berechnung der Lenkkraftunterstützung, die dazu ausgebildet ist, das Verfahren nach einem der vorhergehenden Ansprüche auszuführen.

Eine Ausführungsform der Erfindung wird nachfolgend anhand der Zeichnungen näher erläutert. Gleiche bzw. funktionsgleiche Bauteile sind dabei in den Figuren mit denselben Bezugszeichen versehen.

Die Figuren zeigen:

Fig. 1: eine schematische Darstellung eines elektromechanischen Lenksystems, sowie

Fig. 2: ein Blockdiagramm eines Verfahrens zur Bestimmung des erforderlichen Motordrehmomentes des Elektromotors des elektromechanischen Lenksystems.

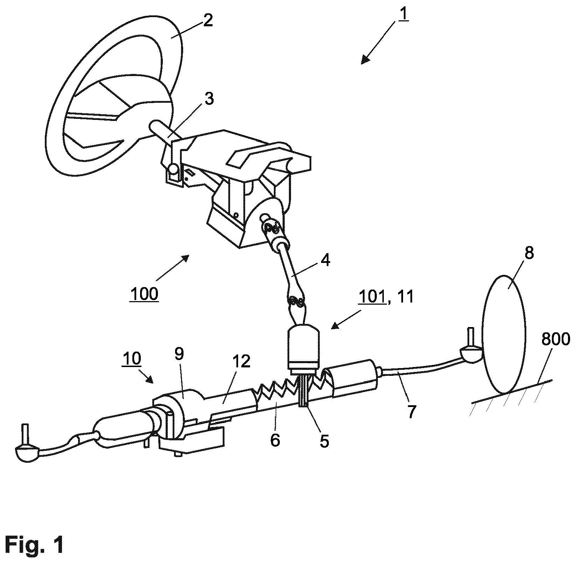

In der Figur 1 ist eine elektromechanische Kraftfahrzeugservolenkung 1 mit einem Lenkrad 2, das mit einer oberen Lenkwelle 3 drehfest gekoppelt ist, schematisch dargestellt. Über das Lenkrad 2 bringt der Fahrer ein entsprechendes Drehmoment als Lenkbefehl in die Lenkwelle 3 ein. Das Drehmoment wird dann über die obere Lenkwelle 3 und untere Lenkwelle 4 auf ein Lenkritzel 5 übertragen. Das Ritzel 5 kämmt in bekannter Weise mit einem Zahnsegment einer Zahnstange 6. Die Zahnstange 6 ist in einem Lenkungsgehäuse in Richtung ihrer Längsachse verschieblich gelagert. An ihrem freien Ende ist die Zahnstange 6 mit Spurstangen 7 über nicht dargestellte Kugelgelenke verbunden. Die Spurstangen 7 selbst sind in bekannter Weise über Achsschenkel mit je einem gelenkten Rad 8 des Kraftfahrzeugs verbunden. Eine Drehung des Lenkrades 2 führt über die Verbindung der Lenkwelle 3 und des Ritzels 5 zu einer Längsverschiebung der Zahnstange 6 und damit zu einer Verschwenkung der gelenkten Räder 8. Die gelenkten Räder 8 erfahren über eine Fahrbahn 800 eine Rückwirkung, die der Lenkbewegung entgegenwirkt. Zum Verschwenken der Räder 8 ist folglich eine Kraft erforderlich, die ein entsprechendes Drehmoment am Lenkrad 2 erforderlich macht. Ein Elektromotor 9 einer Servoeinheit 10 ist vorgesehen, um den Fahrer bei dieser Lenkbewegung zu unterstützen.

Die obere Lenkwelle 3 und die untere Lenkwelle 4 sind drehfest über ein Kardangelenk miteinander gekoppelt. Eine Drehmomentsensoreinheit 11 erfasst die Verdrehung der oberen Lenkwelle 3 gegenüber dem Ritzel 5 als ein Maß des an der Lenkwelle 3 oder des Lenkrades 2 manuell ausgeübten Drehmomentes. In Abhängigkeit des von der Drehmomentsensoreinheit 11 gemessen Drehmoments stellt die Servoeinheit 10 eine Lenkunterstützung für den Fahrer bereit. Die Servoeinheit 10 kann dabei als Hilfskraftunterstützungseinrichtung 100, 101, 10 entweder mit einer Lenkwelle 3, dem Lenkritzel 5 oder der Zahnstange 6 gekoppelt sein. Die jeweilige Hilfskraftunterstützung 100, 101, 10 trägt ein Hilfskraftmoment in die Lenkwelle 3, das Lenkritzel 5 und/oder in die Zahnstange 6 ein, wodurch der Fahrer bei der Lenkarbeit unterstützt wird. Die drei unterschiedlichen in Figur 1 dargestellten Hilfskraftunterstützungseinrichtungen 10, 100, 101 zeigen alternative Positionen für deren Anordnung. Üblicherweise ist nur eine einzige der gezeigten Positionen mit einer Hilfskraftunterstützung belegt. Die Servoeinheit 10 weist zur Berechnung der Lenkunterstützung eine elektronische Steuereinheit 12 auf.

In der elektronischen Steuereinheit 12 wird das erforderliche Motordrehmoment für den Elektromotor der Servoeinheit um ein gewünschtes Lenkgefühl für den Fahrer abzubilden bestimmt.

Für den Fall, dass sich das Lenksystem in einem halbautonomen oder halbautomatischen Fahrmodus befindet und sowohl ein Positionsregler als auch ein Drehmomentregler das erforderliche Motordrehmoment berechnen, ist die Abstimmung der Kombination der beiden Regler schwierig, da leicht Schwingungen auftreten können. Es wurde festgestellt, dass ein besseres Leistungs- und Stabilitätsniveau erreicht werden kann, wenn die Kombination der beiden Regler im Eingang einer Boost-Regelung durchgeführt wird.

Bei der Boost-Regelung handelt sich um eine Vorwärtsregelung (engl. feed forward). Das erforderliche Motordrehmoment des Elektromotors wird berechnet als MotReqTrq=f(TsuTrq,VhlSpd), wobei f eine statische Look-up-Tabelle, TsuTrq das mittels Drehmomentsensor (TSU) gemessene Handdrehmoment am Lenkrad und VhlSpd die Fahrzeuggeschwindigkeit ist. Das bedeutet, dass es in diesem Regelkreis kein Fehlersignal gibt, das durch den Regler minimiert wird. Die Werte in der Look-up-Tabelle f bestimmen das Lenkgefühl und die Stabilität des Regelkreises. Die Funktion f wird als Verstärkungskennfeld bezeichnet. Bei vorgegebener Fahrzeuggeschwindigkeit wird das Verstärkungskennfeld zu einer Kurve und wird als Verstärkungskurve (engl. boost curve)

bezeichnet:

$$MotReqTrq=f(TsuTrq).$$

Der Grund dafür, dass das Leistungs- und Stabilitätsniveau bei Kombination der beiden Regler vor der Boost-Regelung besser ist, liegt darin, dass die Boost-Regelung hohe Motordrehmomentänderungen erzeugen kann, wenn das gemessene Lenksäulendrehmoment sich ändert und die Verstärkung (Tangente der Verstärkungskurve) hoch ist (bei hohem Lenksäulendrehmoment). Das bedeutet, dass die Boost-Regelung sehr empfindlich auf das gemessene Lenksäulendrehmoment reagieren kann, und wenn die Kombination der beiden Regler nach der Boost-Regelung durchgeführt wird und die Kombination auch durch das gemessene Lenksäulendrehmoment gesteuert wird, dies zu unerwünschten Schwingungen in der Regelschleife führen kann.

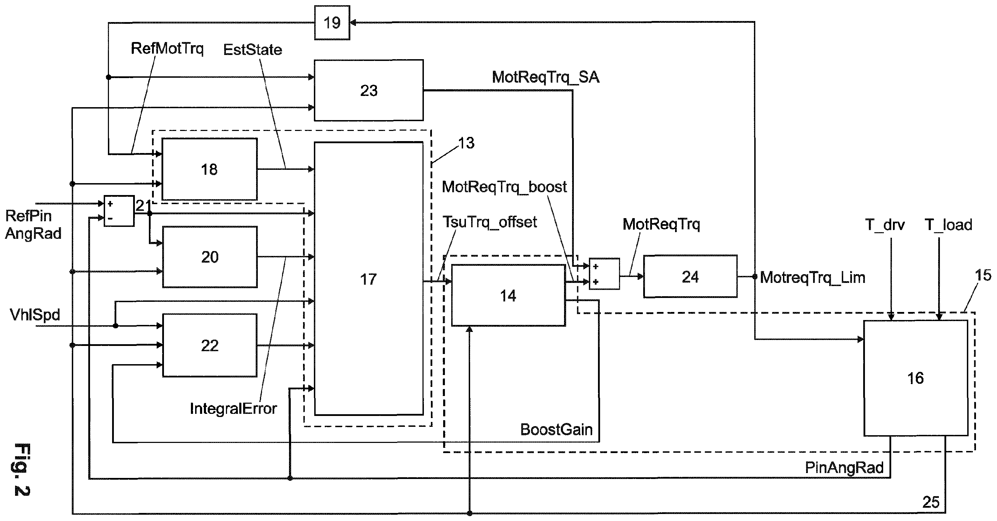

Wenn die Kombination jedoch vor der Boost-Regelung durchgeführt wird, beeinflusst die hohe Empfindlichkeit der Verstärkungskurve die Kombination weniger, so dass ein stabilerer Regelkreis eingestellt werden kann. Um die Kombination von Positionsregelung und Drehmomentregelung vor der Boost-Regelung zu realisieren, wird ein Lenksäulenversatzdrehmoment bestimmt, dass einer Lage- bzw. Winkelregelung des Elektromotors der Servoeinheit gleichkommt. Dazu wird ein LQG-Regler (engl. linear-quadratic-gaussian controller) implementiert, der zusammen mit der Boost-Regelung und einem Motorregler die Funktion der Lageregelung realisiert. Diese drei Regler sind in Reihe geschaltet. Figur 2 zeigt eine Ausführungsform einer Software-Architektur des LQG-Reglers 13 für eine Boost-Regelung 14. Das Ziel der Boost-Regelung ist es, ein Hilfsdrehmoment zu erzeugen, das den Fahrer bei der Lenkung des Kraftfahrzeuges unterstützt. Die Boost-Regelung basiert auf einer Verstärkungskurve bzw. auf einem Verstärkungskennfeld. Die Verstärkungskurve definiert die statische Beziehung zwischen dem vom Fahrer aufgebrachten Eingangsdrehmoment und dem vom Elektromotor erzeugten Unterstützungsdrehmoment. In einem einfachen System, in dem eine lineare Beziehung zwischen Eingangsdrehmoment und Ausgangsdrehmoment besteht, kann die Verstärkungskurve die Form einer Geraden haben. In einer realen Anwendung führt eine einfache "geradlinige" Verstärkungskurve nicht zu zufriedenstellenden Ergebnissen. Die Verstärkungskurve ist daher eine nichtlineare Kurve, die in mehreren Betriebspunkten linearisiert werden muss.

Ein Lenkungsmodell 15 für die Boost-Regelung wurde entwickelt, dass das herkömmliche Lenkungsmodell 16 (die Lenkmechanik des elektromechanischen Lenksystems, eine Motordrehmomentdynamik) und die Boost-Regelung 14 mit linearisierter Verstärkungskurve umfasst. Für jeden Betriebspunkt, der linearisiert werden muss, ist ein Lenkungsmodell vorgesehen. Ein LQ-Regler 17 (engl. linear-quadratic controller) wird eingesetzt, der in einem geschlossenen Regelkreis mit dem jeweiligen Lenkungsmodell 15 eine Lage- bzw. Winkelregelung des Elektromotors vornehmen kann. Bei einem LQ-Regler 17 handelt es sich um einen Regler mit einer Zustandsrückführung. Die Zustände des Lenksystems müssen daher bestimmt werden. Diese Aufgabe wird von einem Zustandsschätzers 18, insbesondere Kalman-Filter übernommen. Der vorgeschlagene Regler ist also ein LQG (LQ+Kalman)-Regler 13.

Für den Zustandsschätzer 18 wird das Referenzmotordrehmoment RefMotTrq aus dem erforderlichen Motordrehmoment (MotReqTrq_Lim) berechnet. Das Referenzmotordrehmoment (RefMotTrq) wird als ein verzögertes erforderliches Motordrehmoment betrachtet werden. Dazu wird das rückgeführte erforderliche Motordrehmoment (MotReqTrq_Lim) mittels Verzögerungseinheit 19 zeitlich verzögert an den Zustandsschätzer 18 übermittelt.

Als Eingangssignale erhält der LQ-Regler 17 die vom Zustandsschätzer 18 geschätzten Zustandswerte (EstStates), eine Referenzposition (Winkel) des Elektromotors und die gemessene Position (Winkel) des Elektromotors oder äquivalent dazu die Zahnstangen-/Lenksäulen-/Ritzelposition (RefPinAngRad, PinAngRad), wie dargestellt. Der LQ-Regler 17 bestimmt ein Lenksäulenversatzdrehmoment (TsuTrq_offset), das zusätzlich zu den gemessenen Werten in die Verstärkungsregelung 14 einfließt.

Der LQG-Regler 13 wird über eine Verlustfunktion definiert, die das Quadrat des Schleppfehlers (Differenz zwischen der Referenzposition (RefPinAngRad oder Referenzmotorwinkel oder Referenzzahnstangenposition) und der gemessenen Position (PinAngRad oder Motorwinkel oder Zahnstangenposition)), das Quadrat des Integrals des Schleppfehlers und das Quadrat des Lenksäulenversatzdrehmoments (TsuTrq_offset) enthält. Es ist eine Integrationseinheit 20 vorgesehen, die das Integral des Schleppfehlers 21 (IntegralError) bestimmt und an den LQ-Regler weitergibt.

Das Integral kann ein starkes Überschwingen verursachen, weshalb der Anteil des Integrals durch einen geeigneten Faktor reduziert werden kann. Das Überschwingen kann auch durch die Einstellung eines additiven Dämpfungsdrehmoments reduziert werden. Dazu ist eine Dämpfungseinheit 22 vorgesehen, in der eine Dämpfung bestimmt wird, die in den LQ-Regler 17 einfließt. Der Betrag des Integrals wird künstlich verringert, wenn die gemessene Position nahe an der Referenzposition liegt, die Geschwindigkeitsdifferenz zwischen der Referenzposition und der gemessenen Position groß ist und die gemessene Position zur Referenzposition hin tendiert.

Der Betrag des Integrals wird auch in solchen Situationen reduziert, beispielsweise durch Reduktion der Integralverstärkung im LQ-Regler, wenn die Fahrzeuggeschwindigkeit niedrig ist (niedriger als <10 km/h).
Das zusätzliche mittels der Dämpfungseinheit 22 bestimmte Dämpfungsmoment hängt von der Fahrzeuggeschwindigkeit (VhlSpd), weiteren gemessenen Werten und einer aus der Boost-Regelung 14 abgeleiteten Verstärkung (engl. boost gain) ab. Bei geringeren Fahrzeuggeschwindigkeiten ist eine höhere Dämpfung erforderlich.

Die Boost-Regelung 14 berechnet mit dem Lenksäulenversatzdrehmoment (TsuTrq_offset) das erforderliche Motordrehmoment (MotReqTrq_boost) des Elektromotors. Die Boost-Regelung 14 weist einen Stabilisierungsfilter (PDT1-Glied) auf, um die Stabilitätsmarge des Regelkreises zu verbessern.

Die anderen Lenkeigenschaften, wie Rückstellung des Lenkrades, Dämpfung usw., werden durch einen Lenkalgorithmus (SA) 23 realisiert, dessen Ausgang ebenfalls ein erforderliches Motordrehmoment (MotReqTrq_SA) ist. Das mittels des Lenkalgorithmus 23 bestimmte erforderliche Motordrehmoment wird zu dem mittels der Verstärkungsregelung 14 bestimmten erforderlichen Motordrehmoment (MotReqTrq_boost) addiert, um das erforderliche Nettomotordrehmoment (MotReqTrq) zu berechnen. Das erforderliche Nettomotordrehmoment wird durch einen Motordrehmomentbegrenzer (MTL) 24 auf einen vorgegeben Wertebereich begrenzt, um ein gefordertes Sicherheitsniveau zu gewährleisten.

Das erforderliche Motordrehmoment wird durch das elektromechanische Lenksystem realisiert, was eine Veränderung der Position der Zahnstange als Funktion des erforderlichen Motordrehmoments, des Fahrerhandmoments (T_drv) und des Lastmoments (T_load) bewirkt.

Das erforderliche Nettomotordrehmoment (MotReqTrq_Lim) des Elektromotors fließt in das nachgeschaltete Lenkungsmodell 15 ein. In das Lenkungsmodell 15 fließen außerdem das Handmoment des Fahrers (T_drv) und das Lastmoment (T_load) ein. Das Lenkungsmodell 15 bestimmt eine Ritzelposition (PinAngRad), die als Eingangswert dem LQ-Regler 17 zugeführt wird. Außerdem wird eine Motorwinkelgeschwindigkeit (MotAsp) und das gemessene Motordrehmoment (Motorstroms, T_mot), sowie das vom Fahrer aufgebrachte Lenksäulendrehmoment (T_TSU, oder TSDU-Drehmoment) gemessen und als Messwerte 25 an die jeweiligen Eingänge der Komponenten im Regelkreis weitergegeben.

Folgende Werte werden bevorzugt gemessen:

- das vom Fahrer aufgebrachte Lenksäulendrehmoment (T_TSU oder TSDU-Drehmoment),

- das Motordrehmoment (T_mot),

- die Motorwinkeldrehzahl des Elektromotors (MotAspRps) und

- die Motorposition oder äquivalent dazu die Lenksäulen-/Ritzelposition (PinAngRad).

## Patentansprüche

1. Verfahren zur Steuerung eines elektromechanischen Lenksystems (1) bei halbautonomem oder halbautomatischem Lenkvorgang, aufweisend den folgenden Schritt:

   - Bestimmen eines erforderlichen Motordrehmomentes (MotReqTrq) zur Ansteuerung eines Elektromotors (9) einer Servoeinheit (10) des elektromechanischen Lenksystems (1), wobei eine Boost-Regelung (14) durchgeführt wird, die in Abhängigkeit von einem am Lenkrad anliegenden Handdrehmoment (TsuTrq) und der Fahrzeuggeschwindigkeit (VhlSpd) sowie einem Lenksäulenversatzdrehmoment (TsuTrq_offset) das erforderliche Motordrehmoment (MotReqTrq) bestimmt, wobei das Lenksäulenversatzdrehmoment (TsuTrq_offset) eine Positionsregelung des Elektromotors (9), eines Lenkritzels oder einer Zahnstange abbildet.

2. Verfahren nach Anspruch 1, **dadurch gekennzeichnet, dass** das Verfahren einen LQ-Regler (17) umfasst, der der Boost-Regelung (14) vorgeschaltet ist und der das Lenksäulenversatzdrehmoment (TsuTrq_offset) basierend auf der Grundlage entweder einer Referenzposition des Elektromotors und einer gemessenen Position des Elektromotors oder einer Referenzritzelposition eines Lenkritzels des Lenksystems (RefPinAngRad) und einer gemessenen Position des Lenkritzels (PinAngRad) oder einer Referenzzahnstangenposition und einer gemessenen Zahnstangenposition bestimmt.

3. Verfahren nach Anspruch 1 oder 2, **dadurch gekennzeichnet, dass** das Verfahren ein Lenkungsmodell (15) für die Boost-Regelung (14) umfasst, das die Boost-Regelung (14) und ein nachgeschaltetes Lenkungsmodell (16) aufweist, wobei eine Verstärkungskurve der Verstärkungsregelung (14) verschiedene Betriebspunkte hat und in diesen Betriebspunkten linearisiert wird und für jeden dieser Betriebspunkte ein Lenkungsmodell vorhanden ist.

4. Verfahren nach Anspruch 2 und Anspruch 3, **dadurch gekennzeichnet, dass** das nachgeschaltete Lenkungsmodell (16) die gemessene Position des Elektromotors oder die gemessene Ritzelposition eines Lenkritzels (PinAngRad) des Lenksystems an den Eingang des LQ-Regler (17) weitergibt.

5. Verfahren nach einem der vorhergehenden Ansprüche soweit auf Anspruch 2 rückbezogen, **dadurch gekennzeichnet, dass** das Verfahren einen Zustandsschätzer (18) umfasst, der Zustände des Lenksystems bestimmt und diese an den LQ-Regler (17) weitergibt.

**6.** Verfahren nach Anspruch 5, **dadurch gekennzeichnet, dass** der Zustandsschätzer (18) einen Kalman-Filter umfasst.

**7.** Verfahren nach einem der vorhergehenden Ansprüche soweit auf Anspruch 2 rückbezogen, **dadurch gekennzeichnet, dass** der LQ-Regler (17) eine Verlustfunktion definiert, die das Quadrat des Schleppfehlers, das Quadrat des Integrals des Schleppfehlers und das Quadrat des Lenksäulenversatzdrehmoments (TsuTrq_offset) enthält.

**8.** Verfahren nach Anspruch 7, **dadurch gekennzeichnet, dass** das Verfahren eine Integrationseinheit (20) und eine Dämpfungseinheit (22) umfasst, wobei die Integrationseinheit (20) das Integral des Schleppfehlers bereitstellt und an den LQ-Regler (17) übermittelt und die Dämpfungseinheit (22) ein Dämpfungsmoment bestimmt, dass von der Fahrzeuggeschwindigkeit (VhlSpd), weiteren gemessenen Werten und einer aus der Boost-Regelung (14) abgeleiteten Verstärkung abhängt.

**9.** Verfahren nach Anspruch 8, **dadurch gekennzeichnet, dass** das Dämpfungsmoment dazu vorgesehen ist, den Einfluss des Integrals des Schleppfehlers bei der Bestimmung des Lenksäulenversatzdrehmoments (TsuTrq_offset) im LQ-Regler (17) zu reduzieren.

**10.** Verfahren nach einem der vorhergehenden Ansprüche, **dadurch gekennzeichnet, dass** das Verfahren einen Lenkalgorithmus (23) umfasst, der mittels eines Referenzmotordrehmomentes und weiteren Messwerten (25) ein erforderliches Motordrehmoment (MotReqTrq_SA) bestimmt, dass zu dem mittels der Boost-Regelung (14) bestimmten erforderlichen Motordrehmoment (MotReqTrq_boost) addiert wird.

**11.** Verfahren nach Anspruch 10, **dadurch gekennzeichnet, dass** der aus der Addition resultierende Wert in einem Motordrehmomentbegrenzer (24) auf einen vorgegebenen Wertebereich begrenzt wird und der daraus resultierende Wert (MotReqTrq_Lim) in das Lenkungsmodell (16) einfließt.

**12.** Elektromechanisches Lenksystem (1) für ein Kraftfahrzeug aufweisend

    - ein mit einer unteren Lenkwelle (4) verbundenes Ritzel (5), welches mit einer in einem Gehäuse entlang einer Längsachse verschieblich gelagerten Zahnstange (6) zur Lenkung von Rädern (8) in Eingriff steht,
    - wenigstens einen Elektromotor (9) zur Lenkkraftunterstützung, und
    - eine elektronische Steuereinheit (12) zur Berechnung der Lenkkraftunterstützung, die dazu ausgebildet ist, das Verfahren nach einem der vorhergehenden Ansprüche auszuführen.

**Claims**

**1.** Method for controlling an electromechanical steering system (1) during a semi-autonomous or semi-automatic steering operation, comprising the following step:

    - Determining a required motor torque (MotReqTrq) for driving an electric motor (9) of a servo unit (10) of the electromechanical steering system (1), wherein a boost control (14) is performed which determines the required motor torque (MotReqTrq) as a function of a hand torque (TsuTrq) applied to the steering wheel and the vehicle speed (VhlSpd) as well as a steering column offset torque (TsuTrq_offset), wherein the steering column offset torque (TsuTrq_offset) represents a position control of the electric motor (9), a steering pinion, or a rack.

**2.** The method according to claim 1, **characterized in that** the method comprises an LQ controller (17) that is connected upstream of the boost controll (14) and that determines the steering column offset torque (TsuTrq_offset) based on either a reference position of the electric motor and a measured position of the electric motor or a reference pinion position of a steering pinion of the steering system (RefPinAngRad) and a measured position of the steering pinion (PinAngRad), or a reference rack position and a measured rack position.

**3.** The method according to claim 1 or 2, **characterized in that** the method comprises a steering model (15) for the boost control (14), which comprises the boost control (14) and a downstream steering model (16), wherein a gain curve of the boost control (14) has different operating points and is linearized at these operating points, and a steering model is available for each of these operating points.

**4.** The method according to claim 2 and claim 3, **characterized in that** the downstream steering model (16) transmits the measured position of the electric motor or the measured pinion position of a steering pinion (PinAngRad) of the steering system to the input of the LQ controller (17).

**5.** The method according to any of the preceding claims, insofar as it depends on claim 2,, **characterized in that** the method comprises a state estimator (18) that determines states of the steering system and transmits these to the LQ controller (17).

6. The method according to claim 5, **characterized in that** the state estimator (18) comprises a Kalman filter.

7. The method according to any of the preceding claims, as referred to in claim 2, **characterized in that** the LQ controller (17) defines a loss function that includes the square of the tracking error, the square of the integral of the tracking error, and the square of the steering column offset torque (TsuTrq_offset).

8. The method according to claim 7, **characterized in that** the method comprises an integration unit (20) and a damping unit (22), wherein the integration unit (20) provides the integral of the tracking error and transmits it to the LQ controller (17), and the damping unit (22) determines a damping torque that depends on the vehicle speed (VhlSpd), other measured values, and a gain derived from the boost control (14).

9. The method according to claim 8, **characterized in that** the damping torque is provided to reduce the influence of the integral of the tracking error in determining the steering column offset torque (TsuTrq_offset) in the LQ controller (17).

10. The method according to any of the preceding claims, **characterized in that** the method comprises a steering algorithm (23) that determines a required motor torque (MotReqTrq_SA) using a reference motor torque and further measured values (25), which is added to the required motor torque (MotReqTrq_boost) determined by the boost control (14).

11. The method according to claim 10, **characterized in that** the value resulting from the addition is limited to a predetermined range by a motor torque limiter (24), and the resulting value (MotReqTrq_Lim) is fed into the steering model (16).

12. Electromechanical steering system (1) for a motor vehicle, comprising

   - a pinion (5) connected to a lower steering shaft (4), which meshes with a rack (6) mounted in a housing so as to be slidable along a longitudinal axis for steering wheels (8),
   - at least one electric motor (9) for steering assistance, and
   - an electronic control unit (12) for calculating the steering assistance, which is configured to perform the method according to one of the preceding claims.

## Revendications

1. Procédé de commande d'un système de direction électromécanique (1) lors d'une manœuvre de direction semi-autonome ou semi-automatique, comprenant l'étape suivante :

   - détermination d'un couple moteur requis (MotReqTrq) pour commander un moteur électrique (9) d'une unité d'assistance (10) du système de direction électromécanique (1), une régulation boost (14) étant effectuée, qui détermine le couple moteur requis (MotReqTrq) en fonction d'un couple manuel (TsuTrq) appliqué au volant et de la vitesse du véhicule (VhlSpd) ainsi que d'un couple de décalage de la colonne de direction (TsuTrq_offset), le couple moteur requis (MotReqTrq) étant déterminé, le couple de décalage de la colonne de direction (TsuTrq_offset) représentant une régulation de position du moteur électrique (9), d'un pignon de direction ou d'une crémaillère.

2. Procédé selon la revendication 1, **caractérisé en ce que** le procédé comprend un régulateur LQ (17) qui est monté en amont de la régulation boost (14) et qui détermine le couple de décalage de la colonne de direction (TsuTrq_offset) sur la base soit d'une position de référence du moteur électrique et d'une position mesurée du moteur électrique, soit d'une position de référence d'un pignon de direction du système de direction (RefPinAngRad) et d'une position mesurée du pignon de direction (PinAngRad), soit d'une position de référence de la crémaillère et d'une position mesurée de la crémaillère.

3. Procédé selon la revendication 1 ou 2, **caractérisé en ce que** le procédé comprend un modèle de direction (15) pour la régulation boost (14), qui comprend la régulation boost (14) et un modèle de direction en aval (16), une courbe de gain de la régulation de gain (14) présentant différents points de fonctionnement et étant linéarisée dans ces points de fonctionnement, et un modèle de direction étant disponible pour chacun de ces points de fonctionnement.

4. Procédé selon les revendications 2 et 3, **caractérisé en ce que** le modèle de direction en aval (16) transmet la position mesurée du moteur électrique ou la position mesurée d'un pignon de direction (PinAngRad) du système de direction à l'entrée du régulateur LQ (17).

5. Procédé selon l'une des revendications précédentes, dans la mesure où il se réfère à la revendication 2, **caractérisé en ce que** le procédé comprend un estimateur d'état (18) qui détermine les états du système de direction et les transmet au régulateur LQ (17).

6. Procédé selon la revendication 5, **caractérisé en ce que** l'estimateur d'état (18) comprend un filtre de Kalman.

7. Procédé selon l'une des revendications précédentes, dans la mesure où il se réfère à la revendication 2, **caractérisé en ce que** le régulateur LQ (17) définit une fonction de perte qui comprend le carré de l'erreur de poursuite, le carré de l'intégrale de l'erreur de poursuite et le carré du couple de décalage de la colonne de direction (TsuTrq_offset).

8. Procédé selon la revendication 7, **caractérisé en ce que** le procédé comprend une unité d'intégration (20) et une unité d'amortissement (22), l'unité d'intégration (20) fournissant l'intégrale de l'erreur de poursuite et la transmettant au régulateur LQ (17), et l'unité d'amortissement (22) déterminant un couple d'amortissement qui dépend de la vitesse du véhicule (VhlSpd), d'autres valeurs mesurées et d'un gain dérivé de la régulation de boost (14).

9. Procédé selon la revendication 8, **caractérisé en ce que** le couple d'amortissement est prévu pour réduire l'influence de l'intégrale de l'erreur de poursuite lors de la détermination du couple de décalage de la colonne de direction (TsuTrq_offset) dans le régulateur LQ (17).

10. Procédé selon l'une des revendications précédentes, **caractérisé en ce que** le procédé comprend un algorithme de direction (23) qui, au moyen d'un couple moteur de référence et d'autres valeurs mesurées (25), détermine un couple moteur requis (MotReqTrq_SA) qui est ajouté au couple moteur requis (MotReqTrq_boost) déterminé par la régulation boost (14).

11. Procédé selon la revendication 10, **caractérisé en ce que** la valeur résultant de l'addition est limitée à une plage de valeurs prédéfinie dans un limiteur de couple moteur (24) et que la valeur qui en résulte (MotReqTrq_Lim) est intégrée dans le modèle de direction (16).

12. Système de direction électromécanique (1) pour un véhicule automobile, comprenant

    - un pignon (5) relié à un arbre de direction inférieur (4), qui est en prise avec une crémaillère (6) montée de manière coulissante dans un boîtier le long d'un axe longitudinal pour assurer la direction des roues (8),
    - au moins un moteur électrique (9) destiné à l'assistance de direction, et

- une unité de commande électronique (12) destinée à calculer l'assistance de direction, qui est conçue pour mettre en œuvre le procédé selon l'une des revendications précédentes.

**Fig. 1**

**Fig. 2**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2842833 B1